# EUROPEAN PATENT SPECIFICATION

(11) **EP 0 623 194 B1**
(45) Date of publication and mention of the grant of the patent: **06.12.1995**
(21) Application number: 93903480.7
(22) Date of filing: 13.01.1993
(51) Int. Cl.: F16C 9/02, F16C 33/60

(54) **Rolling bearing and method of assembly**
Rollenlager und Verfahren für den Zusammenbau
Palier à roulement et procédé d'assemblage

(30) Priority: 24.01.1992 US 825233
(43) Date of publication of application: 09.11.1994
(73) Proprietor: THE TORRINGTON COMPANY, Torrington, Connecticut 06790 (US)
(72) Inventor: FRANCIS, Thomas, M., Litchfield, CT 06759 (US); SCHICK, Gary T., Goshen, CT 06756 (US)
(74) Representative: Feakins, Graham Allan
(86) International application number: US9300318
(87) International publication number: WO9315329

(56) References cited:
- DE-C- 156 243
- DE-C- 698 002
- DE-C- 960 514
- US-A- 1 481 705
- US-A- 1 863 809
- US-A- 2 371 400
- US-A- 3 007 754
- US-A- 3 140 130

## Description

This invention relates to rolling bearing assemblies with split rings and, more particularly, to those with a split outer ring.

Many applications, such as line shafting, for example, require bearings that are installed radially rather than axially, over the end of a shaft. Such bearings used in the main bearing positions of two-cycle and four-cycle engines typically use split (or fractured) outer rings. To avoid fretting of the outer rings and to reduce wear of the bearing seats, the outer rings are made oversize to engage the bearing seats with a moderate interference fit.

The normal assembly procedure is to place a split cage and roller assembly, or other complement of rolling elements, on the crankshaft journal and then install the split outer ring over them. A snap ring or wire ring may be placed around the outer ring to hold the halves together. The crankshaft with the split outer ring and rolling elements is then fitted into bearing seats in the engine block. A cover providing the other half of the bearing seat is then installed over the split outer ring, and the assembly is bolted together.

Traditionally, the outer ring is split in two places 180 degrees apart, see eg. US-A-1481705. A dowel pin in the engine block engages the split outer ring to locate the race axially and to orientate the split. Typically the ring splits are orientated so they are located 10 to 30 degrees from the parting line between the engine block and the cover.

Fitting the split outer ring in the engine block causes the halves of the outer ring to shift out of alignment as one half is compressed radially inward by the interference fit while the other half is free and not compressed. When the cover is installed and bolted to the engine block, the split surfaces of the outer ring bind together. This can result in mismatch of the outer ring at the split locations, causing undesirable noise or premature fatigue failure of the outer ring or rolling elements.

Some manufacturers have tried to overcome this problem by installing the outer rings with the ring split plane 90 degrees to the split line between the engine block and cover. Such a configuration is unsatisfactory because the split portion of the outer ring is then located in the most heavily loaded part of the load zone.

According to one aspect of the present invention, there is provided a bearing split outer ring and housing assembly of the type providing a raceway for rolling elements formed on the inside of said split outer ring to facilitate rotation of a shaft, said split outer ring being of the type split into an arcuate first portion and an arcuate second portion, said bearing housing having a housing base and a housing cover the combination enclosing said split outer ring and providing an interference fit therewith, said bearing split outer ring and housing assembly being characterised by: said first portion of said split outer ring subtending a first length of arc; and said second portion of said split outer ring subtending a second length of arc, said first length and said second length being unequal to one another, the combination of said first and second portions forming said annular split outer ring, the ends of said outer ring portions all being contained within the housing base.

According to a second aspect of the present invention, there is provided a method of assembly of a housed bearing, the method comprising the steps of: providing a split outer ring, said outer ring being split into an arcuate first portion and an arcuate second portion, said first portion of said split outer ring subtending a first length of arc and said second portion of said split outer ring subtending a second length of arc, said first length and said second length being unequal to one another; retaining said split outer ring over an inner raceway with rolling elements to provide a subassembly, said portions of said split outer ring having ends aligned relative to each other such that a uniform annular outer raceway is formed on the inside of said split outer ring; positioning said subassembly in a housing base such that the ends of the outer ring portions are all contained within the housing base, the housing base subtending approximately 180 degrees of arc; and mounting a housing cover over said subassembly and against said housing base, said housing base and housing cover being dimensioned to provide an interference fit with said split outer ring.

For a better understanding of the present invention, and to show how the same may be carried into effect, reference will now be made, by way of example, to the accompanying drawings, in which:-
Figure 1 is a cross-sectional view of a prior art bearing split outer ring, positioned in a corresponding housing base;
Figure 2 is a cross-sectional view of a prior art bearing and housing assembly including the bearing split outer ring and housing base of Figure 1;
Figure 3 is a sectional view of a preferred embodiment of the present bearing split outer ring together with a retaining ring and shown positioned in a corresponding housing base;
Figure 4 is a perspective view of the embodiment of the bearing split outer ring of Figure 3; and
Figure 5 is a cross-sectional view of a bearing and housing assembly including the preferred embodiment of the bearing split outer ring of Figures 3 and 4.

In this specification, identical elements in different figures are given identical reference characters.

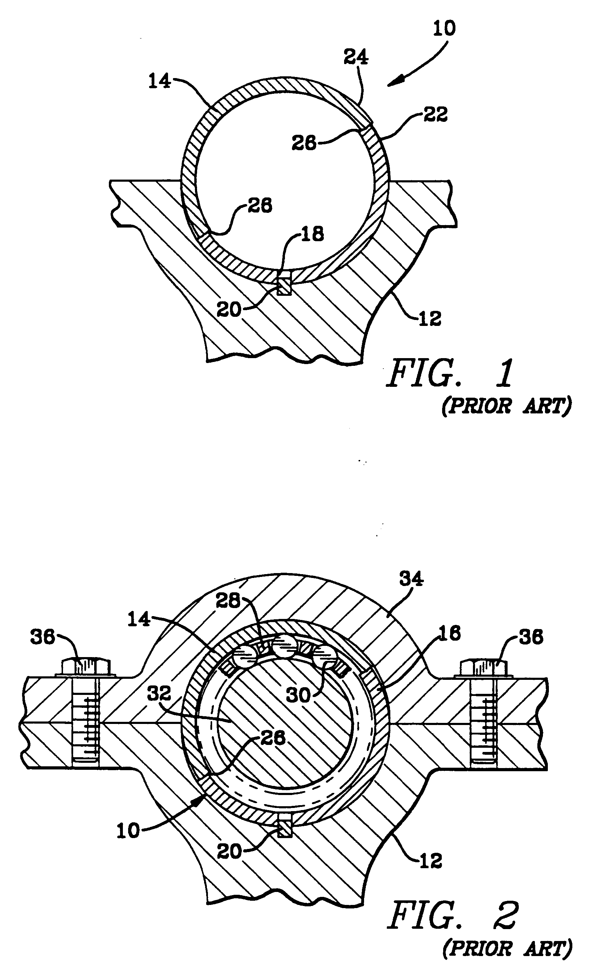

Referring to Figure 1, a bearing split outer ring 10, typical of the prior art, is shown positioned in a housing base 12 that provides a bearing seat for half of the split outer ring 10. The split outer ring 10 is divided substantially in half to form two portions 14 and 16. An aperture 18 is provided in the lower portion 16 for engagement with a dowel pin 20 to locate the split outer ring 10 axially and to orientate the split.

The housing base 12 provides an interference fit with the perimeter of portion 16 of the split outer ring 10, compressing free end 22 thereof radially inward. Because the split is generally orientated at 10 to 30 degrees from the parting line of the housing base, a free end 24 of the upper portion 14 of the split outer ring 10 is not compressed radially inward. As a result, steps 26 can occur in the split outer ring 10 due to mismatch of the upper and lower portions 14 and 16.

Figure 2 shows the same split outer ring 10 assembled in a main bearing location of a two-cycle or four-cycle engine. Split cage 28, rolling elements 30, and crankshaft journal 32 are positioned within the split outer ring 10 and cover 34 is added. The cover 34 is mounted on the housing base 12 by cap screws 36 to provide an upper bearing seat and complete the housing for the split outer ring 10.

As illustrated, the steps 26 caused by the mismatch of the upper and lower portions 14 and 16 of the split outer ring 10 can remain after the cover 34 is installed. The interference fit of the housing base 12 and the cover 34 can cause the ends 22 and 24 to bind together, particularly if the split in the outer ring is formed by fracturing or is otherwise irregular.

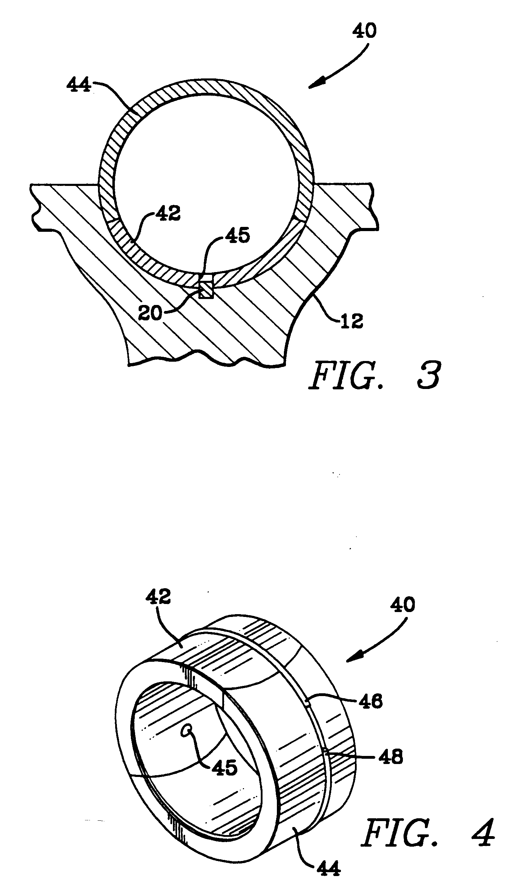

In contrast to the prior art, the present split outer ring 40 is split into two unequal portions, as illustrated in Figures 3, 4 and 5. In the preferred embodiment shown, lower portion 42 subtends approximately 165 degrees of arc and upper portion 44 subtends approximately 195 degrees of arc. It should be appreciated, however, that there can be a range of location of the splits where one portion is somewhat greater than 180 degrees in extent and the other is somewhat less than 180 degrees in extent.

The split outer ring 40 is placed in the housing base 12 such that the split lines are both within the housing base 12. As a result, the tendency of the ends of the upper and lower portions 42 and 44 to shift when the cover 34 is installed is substantially reduced. Preferably, the split lines are orientated by engagement at an aperture 45 with the dowel 20 or by other means to be equidistant from the split line of the housing base 12 and cover 34, as shown.

It is preferred to form the split in the outer ring 40 by a fracturing technique similar to that described in U.S. Patent Nos. 3,834,772 and 3,884,406. The minimum preferred interference fit is .0005 to .0010 inches (0.0127 to 0.0254 mm) to avoid fretting of the outer rings and to reduce wear on the bearing seats without resulting in mismatch of the upper and lower portions 42 and 44 of split outer ring 40. The preferred ranges of arc of the upper and lower portions 42 and 44 are 185 to 205 degrees and 175 to 155 degrees, respectively.

As shown in Figure 4, upper and lower portions 42 and 44 are held in alignment by a retaining ring 46 prior to assembly in the housing base 34. The split outer ring 40 is formed with an annular V-shaped groove 48 for receiving the retaining ring 46. Such grooves and retaining rings are disclosed in U.S. Patent Nos. 2,624,645 and 2,624,105 and are well known. The split outer ring 40 is positioned over the cage 28, rolling elements 30, and shaft journal 32, and is retained by the retaining ring 46, to form a subassembly.

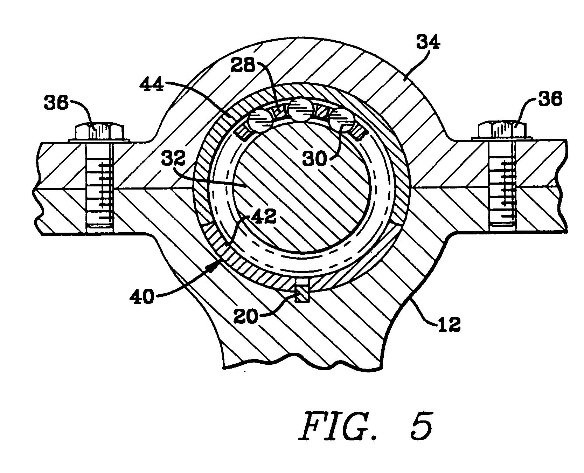

The subassembly just described is then positioned in the housing base 12 and orientated by engagement with the dowel pin 20 before the cover 34 is added. Unlike the prior art split outer ring 10 of Figures 1 and 2, the cover 34 can be secured over the present split outer ring 40 without compressing one free end thereof radially inward while forcing an adjacent free end radially outward, as shown in Figures 4 and 5.

A particular advantage is enhanced operation and longevity due to the reduced chance of a step or mismatch in the raceway formed on the inside of the split outer ring. It has been found that the split outer ring described herein results in quieter operation of the housed bearing and in less likelihood of fatigue problems related to a step or mis-match of the raceway.

The preferred embodiment has been illustrated herein with respect to its application in the main bearing locations of two-cycle and four-cycle engines. However, it should be understood that the present split outer ring and method of assembly are also applicable to other uses of housed bearings with split rings.

## Claims

1. A bearing split outer ring (40) and housing assembly of the type providing a raceway for rolling elements (30) formed on the inside of said split outer ring to facilitate rotation of a shaft (32), said split outer ring (40) being of the type split into an arcuate first portion (44) and an arcuate second portion (42), said bearing housing having a housing base (12) and a housing cover (34) the combination enclosing said split outer ring (40) and providing an interference fit therewith, said bearing split outer ring and housing assembly being characterised by:
said first portion (44) of said split outer ring (40) subtending a first length of arc; and said second portion (42) of said split outer ring (40) subtending a second length of arc, said first length and said second length being unequal to one another, the combination of said first and second portions forming said annular split outer ring, the ends of said outer ring portions all being contained within the housing base (12).

2. An assembly according to claim 1, wherein said first portion (44) of said split outer ring subtends a first length of between 185 and 205 degrees of arc and said second portion (42) of said split outer ring subtends a second length of between 175 and 155 degrees of arc.

3. An assembly according to claim 1 or 2, wherein the first and second portions (44, 42) of the split outer ring include a groove (48) in a radially outward surface for receiving a retainer ring.

4. An assembly according to claim 1, 2 or 3 and further comprising orientating means for maintaining orientation of the split outer ring (40) with respect to the roller bearing housing.

5. An assembly according to claim 4, wherein the orientating means comprises projection means extending from the housing base (12) into engagement with an aperture (45) of the second portion (42) of the split outer ring (40).

6. An assembly according to claim 4 or 5, wherein the orientating means ensures that ends of the first and second portions (44, 42) of the split outer ring (40) are equidistant from split lines between the housing base and the housing cover.

7. An assembly according to any one of the preceding claims, further comprising a retainer ring (46) within a or said radially outward groove (48) of the split outer ring (40) to hold the first and second portions together as a continuous ring.

8. An assembly according to any one of the preceding claims, further comprising a split bearing cage between the outer raceway and an inner raceway to align and locate the rolling elements.

9. A method of assembly of a housed bearing, the method comprising the steps of:
providing a split outer ring (40), said outer ring being split into an arcuate first portion (44) and an arcuate second portion (42), said first portion of said split outer ring subtending a first length of arc and said second portion of said split outer ring subtending a second length of arc, said first length and said second length being unequal to one another;
retaining said split outer ring over an inner raceway with rolling elements (30) to provide a subassembly, said portions of said split outer ring having ends aligned relative to each other such that a uniform annular outer raceway is formed on the inside of said split outer ring;
positioning said subassembly in a housing base (12) such that the ends of the outer ring portions (44,42) are all contained within the housing base, the housing base subtending approximately 180 degrees of arc; and
mounting a housing cover (34) over said subassembly and against said housing base (12), said housing base and housing cover being dimensioned to provide an interference fit with said split outer ring.

10. A method according to claim 9, wherein said first portion (44) of said split outer ring subtends a first length of between 185 and 205 degrees of arc and said second portion (42) of said split outer ring subtends a second length of between 175 and 155 degrees of arc.

## Patentansprüche

1. Anordnung mit einem geteilten äußeren Lagerring (40) und einem Gehäuse der Art, daß eine Laufbahn für Wälzelemente (30) vorgesehen ist, die an der Innenseite des geteilten äußeren Rings ausgebildet ist, um die Drehung einer Welle (32) zu erleichtern, wobei der geteilte äußere Ring (40) von der Art ist, die in einen gekrümmten ersten Abschnitt (44) und einen gekrümmten zweiten Abschnitt (42) unterteilt ist, wobei das Lagergehäuse ein Gehäuseunterteil (12) und eine Gehäuseabdeckung (34) hat, wobei diese Kombination den geteilten äußeren Ring (40) umschließt und damit einen Festsitz bildet, wobei die Kombination aus geteiltem äußerem Lagerring und Gehäuse **dadurch gekennzeichnet** ist, daß der erste Abschnitt (44) des geteilten äußeren Rings (40) sich über eine erste Bogenlänge erstreckt und der zweite Abschnitt (42) des geteilten äußeren Rings (40) sich über eine zweite Bogenlänge erstreckt, wobei die erste Länge und die zweite Länge einander nicht gleich sind, wobei die Kombination der ersten und zweiten Abschnitte den ringförmigen geteilten äußeren Ring bildet, wobei die Enden der äußeren Ringabschnitte alle innerhalb des Gehäuseunterteils (12) enthalten sind.

2. Anordnung nach Anspruch 1, bei dem der erste Abschnitt (44) des geteilten äußeren Rings sich über eine erste Länge von zwischen 185 und 205 Bogengrad erstreckt und der zweite Abschnitt (42) des geteilteneren Rings sich über eine zweite Länge von zwischen 175 und 155 Bogengrad erstreckt.

3. Anordnung nach Anspruch 1 oder 2, wobei die ersten und zweiten Abschnitte (44, 42) des geteilten äußeren Rings eine Nut (48) in einer radial äußeren Oberfläche zur Aufnahme eines Halterings aufweisen.

4. Anordnung nach Anspruch 1, 2 oder 3, die ferner Orientierungsmittel zur Aufrechterhaltung der Orientierung des geteilten äußeren Rings (40) in bezug auf das Rollenlagergehäuse aufweist.

5. Anordnung nach Anspruch 4, bei der die Orientierungsmittel einen Vorsprung aufweisen, der sich von dem Gehäuseunterteil (12) in Eingriff mit einer Öffnung (45) des zweiten Abschnitts (42) des geteilten äußeren Rings (40) erstreckt.

6. Anordnung nach Anspruch 4 oder 5, bei dem die Orientierungsmittel sicherstellen, daß Enden der ersten und zweiten Abschnitte (44, 42) des geteilten äußeren Rings (40) gleiche Entfernungen von Teilungslinien zwischen dem Gehäuseunterteil und der Gehäuseabdeckung haben.

7. Anordnung nach irgendeinem der vorhergehenden Ansprüche, die ferner einen Haltering (46) innerhalb einer oder der genannten radial äußeren Nut (48) des geteilten äußeren Rings (40) aufweist, um die ersten und zweiten Abschnitte als einen kontinuierlichen Ring zusammenzuhalten.

8. Anordnung nach irgendeinem der vorhergehenden Ansprüche, die ferner einen geteilten Lagerkäfig zwischen der äußeren Laufbahn und einer inneren Laufbahn aufweist, um die Wälzelemente auszurichten und zu lokalisieren.

9. Verfahren zum Anordnen eines Lagers in einem Gehäuse, wobei das Verfahren die folgenden Schritte aufweist:
- Bereitstellen eines geteilten äußeren Rings (40), der in einen gekrümmten ersten Abschnitt (44) und einen gekrümmten zweiten Abschnitt (42) unterteilt ist, wobei der erste Abschnitt des geteilten äußeren Rings sich über eine erste Bogenlänge erstreckt und der zweite Abschnitt des geteilten äußeren Rings sich über eine zweite Bogenlänge erstreckt, wobei die erste Länge und die zweite Länge einander nicht gleich sind;
- Haltern des geteilten äußeren Rings über einer inneren Laufbahn mit Wälzelementen (30) zur Bildung einer Unteranordnung, wobei die Abschnitte des geteilten äußeren Rings Enden haben, die relativ zueinander derart ausgerichtet sind, daß eine gleichförmige ringförmige äußere Laufbahn an der Innenseite des geteilten äußeren Rings gebildet wird;
- Anordnen der Unteranordnung in einem Gehäuseunterteil (12) derart, daß die Enden der äußeren Ringabschnitte (44, 42) alle innerhalb des Gehäuseunterteilts enthalten sind, wobei sich das Gehäuseunterteil über etwa 180 Bogengrad erstreckt; und
- Anbringen einer Gehäuseabdeckung (34) über der Unteranordnung und gegenüber dem Gehäuseunterteil (12), wobei das Gehäuseunterteil und die Gehäuseabdeckung so dimensioniert sind, daß sie einen Festsitz mit dem geteilten äußeren Ring bilden.

10. Verfahren nach Anspruch 9, bei dem der erste Abschnitt (44) des geteilten äußeren Rings sich über eine erste Länge von zwischen 185 und 205 Bogengrad erstreckt, und der zweite Abschnitt (42) des geteilten äußeren Rings sich über eine zweite Länge von zwischen 175 und 155 Bogengrad erstreckt.

## Revendications

1. Ensemble de palier formé d'une bague extérieure segmentée (40) et d'un boîtier, du type qui constitue une piste de roulement pour des éléments de roulement (30), formée sur l'intérieur de ladite bague extérieure segmentée pour faciliter la rotation d'un arbre (32), ladite bague extérieure segmentée (40) étant du type qui est segmenté en une première partie arquée (44) et une seconde partie arquée (42), ledit boîtier de palier comportant une base de boîtier (12) et un couvercle de boîtier (34), la combinaison enfermant ladite bague extérieure segmentée (40) et assurant un assemblage serré avec celle-ci, ledit ensemble étant caractérisé en ce que :
- ladite première partie (44) de ladite bague extérieure segmentée (40) sous-tend un arc d'une première longueur; et ladite seconde partie (42) de ladite bague extérieure segmentée (40) sous-tend un arc d'une seconde longueur, ladite première longueur et ladite seconde longueur étant inégales l'une par rapport à l'autre, la combinaison de ladite première partie et de ladite seconde partie formant ladite bague extérieure segmentée annulaire, les extrémités desdites parties de la bague extérieure étant toutes contenues à l'intérieur de la base de boîtier (12).

2. Ensemble selon la revendication 1, dans lequel ladite première partie (44) de ladite bague extérieure segmentée sous-tend un arc d'une première longueur comprise entre 185 et 205°, et ladite seconde partie (42) de ladite bague extérieure segmentée sous-tend un arc d'une seconde longueur comprise entre 175 et 155°.

3. Ensemble selon l'une ou l'autre des revendications 1 et 2, dans lequel la première et la seconde partie (42, 44) de la bague extérieure segmentée comprennent une gorge (48) dans une suface radialement extérieure afin de recevoir un anneau de retenue.

4. Ensemble selon l'une quelconque des revendications 1 à 3, et comprenant en outre des organes d'orientation pour maintenir l'orientation de la bague extérieure segmentée (40) par rapport au boîtier du palier à roulement.

5. Ensemble selon la revendication 4, dans lequel les organes d'orientation comprennent des éléments en projection qui s'étendent depuis la base de boîtier (12) en engagement avec une ouverture (45) de la seconde partie (42) de la bague extérieure segmentée (40).

6. Ensemble selon l'une ou l'autre des revendications 4 et 5, dans lequel les organes d'orientation assurent que les extrémités de la première et de la seconde partie (44, 42) de la bague extérieure segmentée (40) soient équidistantes depuis les lignes de séparation entre la base de boîtier et le couvercle de boîtier.

7. Ensemble selon l'une quelconque des revendications précédentes, comprenant en outre un anneau de retenue (46) à l'intérieur d'une gorge, ou de ladite gorge (48) radialement à l'extérieur de la bague extérieure segmentée (40) pour maintenir ensemble la première et la seconde partie sous la forme d'une bague continue.

8. Ensemble selon l'une quelconque des revendications précédentes, comprenant en outre une cage de palier segmentée entre la piste de roulement extérieure et une piste de roulement intérieure afin d'aligner et de placer les éléments de roulement.

9. Procédé d'assemblage d'un palier en boîtier, le procédé comprenant les étapes consistant à :
- fournir une bague extérieure segmentée (40), ladite bague extérieure étant segmentée en une première partie arquée (44) et une seconde partie arquée (42), ladite première partie de ladite bague extérieure segmentée sous-tendant un arc d'une première longueur et ladite seconde partie de ladite bague extérieure segmentée sous-tendant un arc d'une seconde longueur, ladite première longueur et ladite seconde longueur étant inégales l'une par rapport à l'autre ;
- retenir ladite bague extérieure segmentée par dessus une piste de roulement intérieure avec des éléments de roulement (30) pour constituer un sous-ensemble, lesdites parties de ladite bague extérieure ayant des extrémités qui sont alignées les unes par rapport aux autres, de telle sorte que l'on forme sur l'intérieur de ladite bague extérieure segmentée une piste de roulement extérieure annulaire uniforme ;
- positionner ledit sous-ensemble dans une base de boîtier (12) de telle manière que les extrémités des parties (44, 42) de la bague extérieure soient toutes contenues à l'intérieur de la base de boîtier, la base de boîtier sous-tendant un arc d'approximativement 180° ; et
- monter un couvercle de boîtier (34) par dessus ledit sous-ensemble et contre ladite base de boîtier (12), ladite base de boîtier et ledit couvercle de boîtier ayant des dimensions choisies de manière à assurer un assemblage serré avec ladite bague extérieure segmentée.

10. Procédé selon la revendication 9, dans lequel ladite première partie (44) de ladite bague extérieure segmentée sous-tend un arc d'une première longueur comprise entre 185 et 205°, et ladite seconde partie (42) de ladite bague extérieure segmentée sous-tend un arc d'une seconde longueur comprise entre 175 et 155°.
